(19) Europäisches Patentamt
European Patent Office
Office européen des brevets

(11) Publication number: 0 063 641
B1

(12) EUROPEAN PATENT SPECIFICATION

(45) Date of publication of patent specification: 03.04.85

(51) Int. Cl.$^4$: C 01 B 21/02, C 06 D 5/06

(21) Application number: 81109400.2

(22) Date of filing: 30.10.81

# (54) High yield nitrogen gas generators.

(30) Priority: 16.03.81 US 244191

(43) Date of publication of application:
03.11.82 Bulletin 82/44

(45) Publication of the grant of the patent:
03.04.85 Bulletin 85/14

(84) Designated Contracting States:
DE FR GB IT SE

(56) References cited:
CA-A-1 087 853
CA-A-1 087 854
FR-A-2 186 450
US-A-3 814 694
US-A-3 833 432
US-A-3 947 300
US-A-3 977 924

B.T. FEDOROFF: "Encyclopedia of explosives and related items", vol. 1, 1960, p. A604, Picatinny Arsenal, Dover, NJ (US)
GMELINS HANDBUCH DER ANORGANISCHEN CHEMIE, 8th Edition, Natrium Ergänzungsband, Lieferung 3, Verlag Chemie GmbH, Seite 910, Weinheim, DE

(73) Proprietor: Rockwell International Corporation
2230 East Imperial Highway
El Segundo, California 90245 (US)

(72) Inventor: Artz, Glen Delbert
23945 Welbyway
Canoga Park, CA 91307 (US)
Inventor: Flanagan, Joseph Edward
20883 Kelvin Place
Woodland Hills, CA 91364 (US)

(74) Representative: Wächtershäuser, Günter, Dr.
Tal 29
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 063 641 B1

Courier Press, Leamington Spa, England.

**Description**

Background of the invention

1. Field of the invention

This invention relates to gas generators and is particularly directed to solid propellant gas generators for producing high yields (>50% by weight) of pure nitrogen gas.

2. Description of the prior art

Previously developed gas generators for the production of nitrogen gas have employed sodium azide as the primary source of nitrogen in conjunction with a variety of solid oxidizers. Typical oxidizer examples are fluorocarbon polymers such as Viton A (U.S. Patent 3,977,924), Teflon (U.S. Patent 3,833,432), cupric oxide (German Patent 2,327,741) and numerous others.

U.S. Patent 3,947,300 describes a propellant system in which sodium azide is used with the inorganic oxidants (chlorates, nitrates, chromates, and peroxides) in conjunction with flux promoting compounds such as silicon dioxide. A typical example (5:1:2 molar ratio of $NaN_3$:$NaNO_3$:$SiO_2$) would result in a 42.2 weight percent yield of nitrogen at a temperature of 2050°K.

All of the previous work has resulted in nitrogen gas yields of 20 to 45 weight percent, and propellant physical properties which are marginal in that small pieces of the pressed grains erode upon vibration of the containing vessel. This often results in erratic pressurization rates upon ignition of the propellant charge.

Utilization of flux promoting compounds such as $SiO_2$ also degrade physical properties, but also increase the flame temperature due to secondary chemical reactions such as:

$$Na_2O+SiO_2 \rightarrow Na_2SiO_3$$

The additional heat released from the secondary reactions must then be absorbed in a heat transfer media which adds to the complexity of the overall system.

Summary of the invention

Accordingly, there is provided by the present invention a solid propellant gas generator for producing pure nitrogen gas, which comprises a stoichiometric blend of sodium azide, and a solid oxidizer, characterized in that the oxidizer comprises sodium sulfate.

Objects of the invention

Therefore, it is an object of the present invention to produce pure nitrogen gas from a solid propellant gas generator.

Another object of the present invention is to provide a solid propellant gas generator for producing pure nitrogen which has good physical properties.

Yet another object of the present invention is to provide a solid propellant nitrogen gas generator containing sodium as its only metallic element.

Still a further object of the present invention is to produce a solid propellant nitrogen gas generator which yields greater than 50 weight percent pure nitrogen gas.

Yet another object of the present invention is to provide a solid propellant nitrogen gas generator having reduced flame temperature.

Other objects, advantages and novel features of the present invention will become apparent from the following detailed description of the invention.

Detailed description of the preferred embodiments

In accordance with the present invention there is provided a solid propellant gas generator for producing pure nitrogen gas. The propellant comprises a stoichiometric blend of sodium azide ($NaN_3$) as the primary nitrogen source, and a solid oxidizer which comprises sodium sulfate ($Na_2SO_4$). Additionally the oxidizer may comprise sodium nitrite ($NaNO_2$) and/or sodium nitrate ($NaNO_3$).

The overall chemical reaction for the present pure nitrogen gas generator can be described by the following molar equation, wherein z is always positive:

$$xNaNO_2+yNaNO_3+zNa_2SO_4+(3x+5y+8z)NaN_3 \rightarrow$$

$$\underbrace{(2x+3y+4z)Na_2O+zNa_2S}_{\text{Solid Residue}}+\underbrace{(5x+8y+12z)N_2\uparrow}_{\text{Gas}}$$

By way of example and not limitation, Table I illustrates the range of yields experimentally attained dependent upon the stoichiometry.

TABLE I
Gas generator performance

| Molar ratios | Flame temperature | Wt. % $N_2$ yield |
|---|---|---|
| x=0; y=0; z=1 | 1193°K | 50.75 |
| x=1; y=0; z=0 | 1643°K | 54.02 (comparison) |
| x=0; y=1; z=0 | 1742°K | 54.63 (comparison) |
| x=0; y=1; z=2 | 1275°K | 51.71 |

It should be noted that although only two specific examples have been delineated, any quantities of reactants can be used in accordance with the overall equation described above.

The physical properties of propellants produced from any ratio of x:y:z ranged from about 984 kp/cm$^2$ (14,000 psi) to about 1400 kp/cm$^2$ (20,000 psi) crush strength for a 1,27 cm (1/2") by 1,27 cm (1/2") cylinder. In contradistinction, propellants produced with materials such as $SiO_2$, $Fe_2O_3$, and Teflon® present only possessed crush strengths in the range of 210 kp/cm$^2$ (3,000 psi) to 420 kp/cm$^2$ (6,000 psi).

The nitrogen gas produced from the combustion of the propellants with varying ratios of x:y:z all was of 99.9% or higher purity.

## Claims

1. A solid propellant gas generator for producing pure nitrogen gas comprising a stoichiometric blend of sodium azide ($NaN_3$) and a solid oxidizer, characterized in that the oxidizer comprises sodium sulfate ($Na_2SO_4$).

2. A solid propellant gas generator according to Claim 1, characterized in that the oxidizer comprises additionally $NaNO_3$ and/or $NaNO_2$.

## Patentansprüche

1. Fester Treibmittelgasgenerator zur Erzeugung von reinem Stickstoffgas, umfassend ein stöchiometrisches Gemisch von Natriumazid ($NaN_3$) und festes Oxidationsmittel, dadurch gekennzeichnet, daß das Oxidationsmittel Natriumsulfat ($Na_2SO_4$) umfaßt.

2. Fester Treibmittelgasgenerator nach Anspruch 1, dadurch gekennzeichnet, daß das Oxidationsmittel zusätzlich $NaNO_3$ und/oder $NaNO_2$ umfaßt.

## Revendications

1. Générateur de gaz à propergol solide permettant de produire de l'azote gazeux pur, comprenant un mélange stoechiométrique d'azoture de sodium ($NaN_3$) et d'un oxydant ou comburant solide, caractérisé en ce que l'oxydant comprend du sulfate de sodium ($Na_2SO_4$).

2. Générateur de gaz à propergol solide selon la revendication 1, caractérisé en ce que l'oxydant comprend en outre du $NaNO_3$ et/ou du $NaNO_2$.